# EUROPEAN PATENT SPECIFICATION

(11) **EP 1 870 672 B1**
(45) Date of publication and mention of the grant of the patent: **30.07.2014**
(21) Application number: 06425412.1
(22) Date of filing: 19.06.2006
(51) Int. Cl.: G01C 21/36

(54) **A method for operating a navigation system.**
Procédé d'opération d'un système de navigation
Verfahren zum Betrieb eines Navigationssystems

(43) Date of publication of application: 26.12.2007
(73) Proprietor: Magneti Marelli S.p.A., 20011 Corbetta (MI) (IT)
(72) Inventor: Mortara, Piero, 10020 Baldissero Torinese (Torino) (IT)
(74) Representative: Deambrogi, Edgardo

(56) References cited:
- EP-A1- 1 568 970
- EP-A2- 1 327 858
- WO-A-02/082405
- WO-A-2005/083362
- WO-A1-02/37446
- US-A1- 2003 135 325
- US-A1- 2003 208 314

## Description

The present invention relates in general to satellite navigation systems and their use on board vehicles.

In the market of devices for infotelematic applications on board vehicles, there is observed, on the one hand, the widespread adoption of original equipment systems, i.e. systems integrated in the vehicle itself at the time it is manufactured, which are capable of providing a high level of performance and of safety of use by the user, and, on the other hand, the establishing of personal devices that are much lower in cost, but extremely versatile by virtue of the portability features which enable them to be used in a much greater variety of circumstances.

In the first case, the user, facing a much higher cost in comparison with personal products, has available a complete system, optimized for use on the vehicle, but with the drawback that it can clearly not be used outside that vehicle. He can therefore be led to a destination that is reachable by the vehicle, but he cannot make use of the navigation system once the vehicle is abandoned, if he moves by other means.

In the second case, the user, bearing a lower cost, has available an extremely versatile object that can be used anywhere, but with significant limitations in terms of functionality and the possibility of user-device interaction with adequate margins of safety and ergonomics when the vehicle is being driven. Specifically, the device can make use only of its own satellite positioning information, without being able to refine the data using the vehicle's on-board instruments to compensate for cases of absence of the satellite positioning signal, and the user must consult and handle the device diverting his attention from the driving, not having the possibility of taking advantage of the ergonomic interface devices provided on board (controls on the steering wheel, screens on the dashboard or integrated in the instrument panel, ...)

It is known that some types of widely used telematic devices, such as for example cellular radio mobile telephones, if equipped with wireless connectivity systems (for example according to the Bluetooth protocol) can, if there is a fitted onboard system, be "contextualized", and can therefore be used on board the vehicle, for example using the speech recognition system for issuing commands and the on-board speakerphone facility during a conversation.

WO 2005/083362 discloses a navigation system for vehicles, comprising an on-board base equipment and an operating portion that can be detached from the base and is adapted to operate as an autonomous navigation device. The whole navigation system is not usable without the operating portion, and vice-versa the operating portion is protected per se, since it forms a system unit only in combination with a predetermined cooperating base portion, e.g. by means of a corresponding coding.

EP 1 327 858 discloses a method and system for a wireless interface to the electronics of an automotive vehicle for a remote application in the vehicle or within communication range of the vehicle. The remote application may be a navigation system using vehicle motion sensor data to provide or improve a navigation solution for the vehicle.

The present invention therefore aims to provide a satellite navigation system which avoids the abovementioned drawbacks of the prior art specific to systems residing on board vehicles and specific to exclusively portable personal systems. In particular, the aim is to provide a satellite navigation system that can be used both on board a vehicle and away from the vehicle with the advantages of the single dedicated solutions, without introducing additional costs.

According to the present invention such an aim is achieved by virtue of the method having the features cited in Claim 1.

Particular embodiments form subjects of the dependent claims.

In short, the present invention is based on the principle of producing an autonomous portable satellite navigation device that can be coupled with a vehicle's on-board unit arranged for the acquisition of vehicle movement data by means of on-board sensors, so as to form an integrated system for working out estimated navigation data (dead reckoning) when the portable device is used on board the vehicle.

The portable navigation device is autonomous, being provided with satellite positioning means and reference cartographic representation means (road maps), and can be used to locate its position and as a navigation aid for the user, independently of its association with a vehicle.

Such a device is arranged to detect the presence of a vehicle's on-board unit for the acquisition of vehicle movement data, for example when located or installed on board a vehicle, therefore in close proximity to such a unit, and to establish a link with the unit so as to be able to exchange with it the satellite positioning data and/or the vehicle movement data acquired by the on-board sensors.

In a first variant, the portable navigation device is arranged to convey its own satellite positioning data to an on-board unit, which is adapted to calculate the estimated navigation data (i.e. the navigation strategy) based on the received positioning data and the vehicle movement data acquired by the on-board sensors, and therefore to convey associated navigation instructions to the portable device for the final presentation to the user.

In a second variant, the portable navigation device is arranged to request the unit acquiring vehicle movement data to transmit the movement data acquired on board, and is adapted to calculate in an integrated manner, by means of its own processing unit, the estimated navigation data (i.e. the navigation strategy) based on its own positioning data and on the received vehicle movement data, and to present the associated navigation instructions to the user.

Other features and advantages of the invention will be explained in greater detail in the following detailed description, provided by way of non-limiting example, with reference to the appended drawings in which:
Figures 1a and 1b are schematic representations of two provided usage conditions of a navigation system;
Figure 2 is a block diagram representation of a navigation system;
Figure 3 is an operational flow chart of the method according to the invention;
Figure 4 is a block diagram of a first variant of a navigation system operating according to the invention; and
Figure 5 is a block diagram of a second variant of a navigation system operating according to the invention.

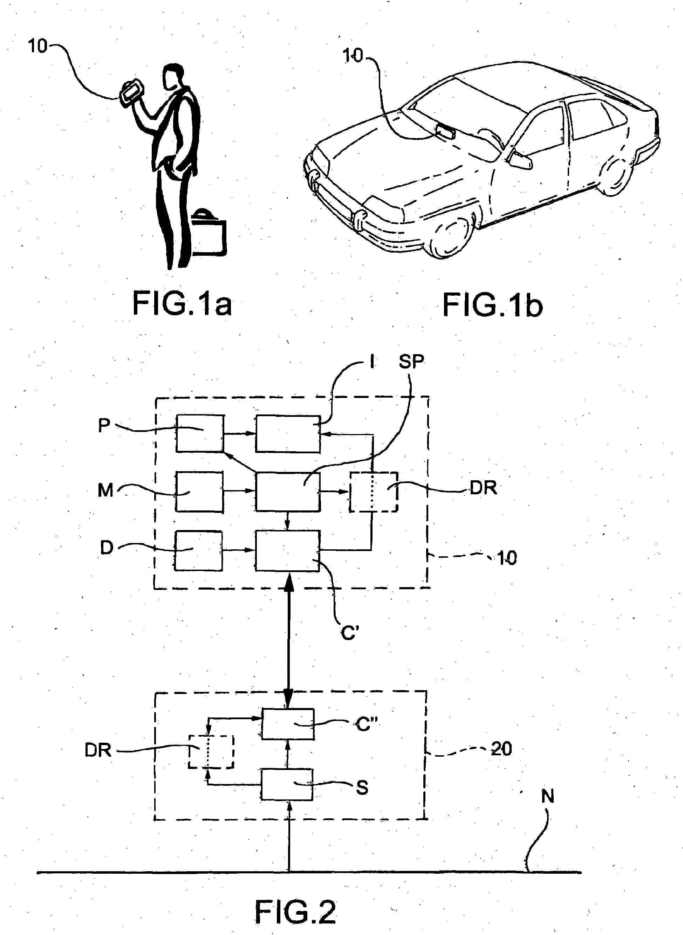

With reference to Figures 1a, 1b and 2, a navigation system is shown, comprising a portable navigation device 10 and a unit 20 installed on board a vehicle and connected to the onboard network N, for example the CAN network, for acquiring movement data from a plurality of on-board sensors (for example, but not exclusively, vehicle speed sensors, a differential odometer, and vehicle lateral and longitudinal acceleration sensors).

The portable navigation device 10 includes a satellite positioning module SP (for example a GPS receiver), a memory module M storing a data base of reference cartographic representations (road maps), a processing module P for calculating navigation (route) data and input/output user interface modules I (for example a keyboard terminal, a display and similar devices). It is able to perform in autonomous mode the navigation functions, in particular to calculate navigation data (information about the route to follow) from the current position of the device, determined by the satellite positioning module, to a pre-selected destination based on the abovementioned reference maps.

The navigation data are therefore supplied to the user in the form of navigation instructions represented, for example, in visual form on the display or issued in audible form through a speech synthesizer.

The on-board unit 20 includes a sensing assembly S able to acquire from the on-board network N, and if necessary process, signals transmitted by vehicle movement sensors, such as for example vehicle speed sensors, a gyroscope, accelerometers, an odometer and sensors representing the change in vehicle movement.

The portable navigation device 10 and the on-board unit 20 also include corresponding communication modules C', C" for setting up a link L for transmitting data between them.

The transmission takes place wirelessly, for example via radio or according to a Bluetooth or Wi-Fi protocol.

The portable navigation device 10 is also provided with detection means D for detecting the presence of an on-board unit 20 within a predetermined operational communication range (for example of the order of magnitude of the dimension of the vehicle itself or of its passenger compartment), and is arranged to automatically set up communication with the abovementioned on-board unit in the event of a verified presence.

The portable navigation device is therefore adapted to assume a first autonomous operational configuration, wherein the navigation data are calculated purely on the basis of the positioning signal of the device received via satellite, and a second assisted operational configuration, wherein the navigation data are calculated (in addition or exclusively) with the aid of vehicle movement data acquired by the on-board sensors. Such an assisted operational configuration can take effect in place of navigation via satellite, for example under conditions in which the satellite positioning data are not received (for example, when travelling through a tunnel or if there is a temporary lack of signal in general), or in combination with it to refine the positioning data acquired via satellite, in particular for the purposes of achieving closer agreement with the reference maps available in the data base of the navigation device.

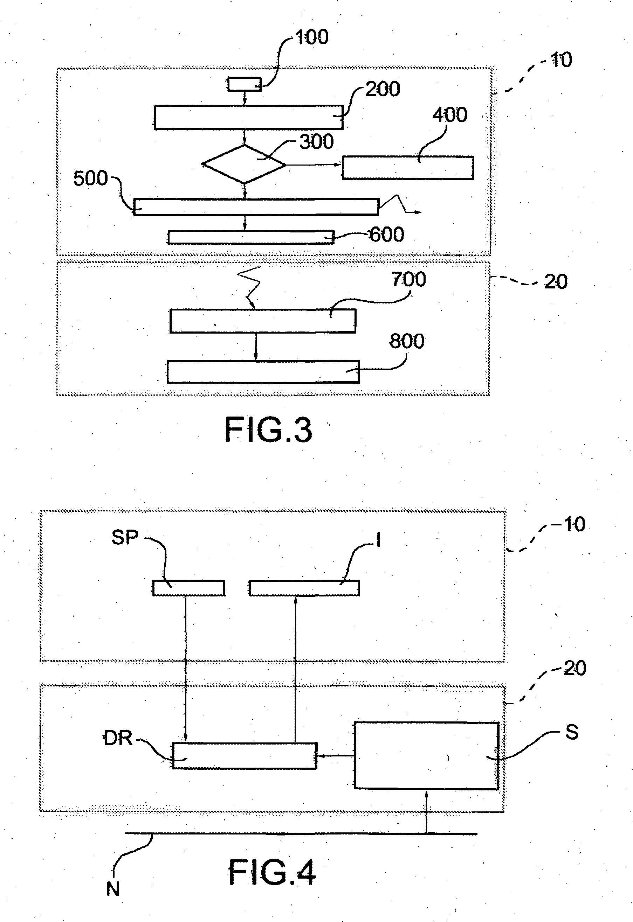

With reference to Figure 3, in the following the method according to the invention for initializing the system is described.

When it is switched on, the portable navigation device 10 starts an initialization procedure 100 and then, at step 200, performs, via the detection means D, a search for the presence of an on-board unit 20 within a predetermined search distance, which corresponds substantially to the range of a wireless communication by the portable device.

If the presence of a nearby on-board unit is not detected (comparison step 300), the portable device is activated in autonomous operating mode (step 400), in which it makes provision for calculating the navigation data on the basis of the positioning signals received via satellite, which are compared with the stored reference maps and preselected destination.

If the presence of a nearby on-board unit 20 is detected, the portable device 10 sends to the on-board unit an activation and connection request (step 500) and arranges itself to operate in integrated mode (step 600). It therefore operates as "master" device.

When the on-board unit 20, which is always listening, receives an activation request signal (at step 700) it arranges itself to acquire vehicle movement data from the on-board network N (step 800).

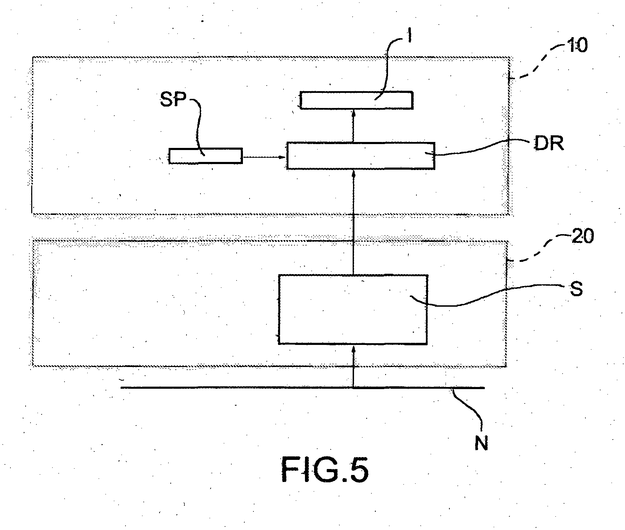

In the case of integrated operational configuration, in which the operation of the portable navigation device 10 is assisted by the on-board unit 20, two alternative configurations are possible, shown respectively in Figures 4 and 5.

In the configuration of Figure 4, a processing module DR for determining the estimated position of the vehicle (Dead Reckoning) is integrated in the on-board unit 20. It is adapted to acquire the satellite positioning data from the portable device 10 via the established communication link L, and the vehicle movement data from the sensing assembly S present in the on-board unit. The module DR is arranged (programmed) to calculate estimated navigation data based on both the satellite positioning data and the vehicle movement data, and to transmit this navigation data, over the established link L, to the portable navigation device 10 to present the data to the user of the system (for example displaying information on a display).

In the configuration of Figure 5, there is instead provided a processing module DR for determining the estimated position of the vehicle, integrated in the portable device 10. It is adapted to acquire the positioning data from the satellite positioning module SP of the portable device, and the vehicle movement data from the sensing assembly S present in the on-board unit 20 via the established link L, and is arranged (programmed) to calculate estimated navigation data based on both the satellite positioning data and the vehicle movement data, and to display this data on the display of the portable device.

Advantageously, mechanical integration of the portable device 10 on board the vehicle is provided by a fast coupling system to install it in a position that is accessible to the driver of the vehicle, for example on the dashboard. Such a fast coupling system can make provision for a connector for the power supply and recharging of the internal battery of the portable device 10 by the on-board electrical power network.

As the communication between the portable device and the on-board unit is established wirelessly, the operation of the portable device is ensured by its own integrated battery, and it can advantageously operate in any position inside the passenger compartment, therefore in possession of the driver or of other passengers.

Conveniently, the functional integration of the portable navigation device with the system on board the vehicle enables additional functions to be implemented, such as for example:
- speech recognition of operational instructions, for the user to issue commands without needing to directly use the interfaces of the portable device;
- use of an extensive mass memory present on board the vehicle to enable the quantity of response messages of the navigation system to be increased, for example names of places, roads, points of interest, etc.;
- use of the car audio equipment to reproduce voice messages;
- use of controls already present on board the vehicle (for example controls on the steering wheel, multifunction joystick, etc.) to optimize, from an ergonomic perspective, the man-machine interface;
- intelligent management strategies for the information and for the signalling to the user according to the level of risk associated with the driving: contextualization on board the vehicle from a safety perspective.

Advantageously, in the case of integration between the portable device and on-board unit, the vehicle movement data acquired by the on-board sensors can be displayed by the display of the portable navigation device to give the driver additional parameters that are generally not present on the on-board panel, for example lateral and longitudinal acceleration data, engine load, torque and instantaneous power delivered, etc.

In conclusion, by adopting the solution according to the invention, it is possible to eliminate the limiting aspects of the two known technologies (portable devices that cannot be integrated, and complex on-board systems) described in the introductory part of this description, and to combine the advantages of both, which in functional and performance terms means to be able to have the use of the basic information (for example vehicle speed, differential odometer data, and lateral and longitudinal acceleration) needed to ensure the operation of the navigation algorithms provided (Dead Reckoning mode), even during a temporary absence of satellite positioning signals, of controls and interfaces that are ergonomically designed from a safety perspective (for example, controls on the steering wheel, voice-operated controls, the size of the display and its positioning in an optimal area in the passenger compartment of the vehicle) with intelligent management and distribution of information for the user according to the driving and traffic conditions, of the on-board audio equipment for reproducing the voice signalling, and of an autonomous use of the navigation device in any other context, owing to the possibility of easy removal from the vehicle, for example at home for the purposes of planning and virtual navigation of itineraries and points of interest, on other unequipped vehicles (cars, motorcycles, bicycles) and even as pedestrians (for example, after having parked the car to continue towards a preselected destination which is located in an area closed to vehicular traffic or in a restricted traffic zone in an unknown urban centre), with performance levels equivalent to those of personal devices currently on the market.

Naturally, the principle of the invention remaining the same, the forms of embodiment and details of construction may be varied widely with respect to those described and illustrated purely by way of non-limiting example, without thereby departing from the scope of protection of the present invention, which is defined by the appended claims.

## Claims

1. A method for operating a navigation system wherein the navigation system comprises:
- an autonomous portable navigation device (10), including satellite positioning means (SP), memory means (M) carrying at least one reference geographical (road) map, and processing means (P) adapted to calculate navigation data from a detected positioning location of the device (10) to a predetermined destination in the at least one reference map; and
- an on-board unit (20) installed on board a vehicle and connected to an on-board network (N) for acquiring movement data from a plurality of on-board sensors;
the portable navigation device (10) and the on-board unit (20) comprising respective communication means (C', C") for transmitting vehicle position data from the portable navigation device (10) to the on-board unit (20) or movement data from the on-board unit (20) to the portable navigation device (10),
the method being **characterised in that** it includes an initialization procedure (100-800), comprising:
when the portable navigation device is switched on, the portable navigation device (10) searches (200) for the presence of an on-board unit (20) within a predetermined operational communication range of the order of magnitude of the dimension of the vehicle or of its passenger compartment,
if the presence of a nearby on-board unit (20) is not detected (300), the portable navigation device (10) assumes a first autonomous operational configuration (400), in which the navigation data is calculated on the basis of the current position of the device (10) determined by the satellite positioning means (SP), and
if the presence of a nearby on-board unit (20) is detected (300):
- the portable navigation device (10) sends (500) to the on-board unit an activation and connection request so as to establish a wireless communication link (L) with the abovementioned on-board unit (20);
- the on-board unit (20) receives (700) an activation request signal and arranges itself to acquire (800) vehicle movement data from the on-board network (N); and
- the portable navigation device (10) assumes a second assisted operational configuration (600), in which the navigation data is calculated on the basis of vehicle movement data acquired at the on-board unit (20).

2. A method according to Claim 1, wherein a processing module (DR) for determining the estimated position of the vehicle is associated with the on-board unit (20), the method comprising:
acquiring positioning data from the satellite positioning means (SP) of the portable navigation device (10) via the established communication link, and vehicle movement data at the on-board unit (20),
calculating at the on-board unit (20) the navigation data from both the satellite positioning data and the vehicle movement data, and
transmitting the navigation data, over the established link (L), to the portable navigation device (10) for presenting the data to a user.

3. A method according to Claim 1, wherein a processing module (DR) for determining the estimated position of the vehicle is associated with the portable navigation device (10), the method comprising:
acquiring positioning data from the satellite positioning means (SP) and vehicle movement data from the on-board unit (20) via the established communication link (L),
calculating at the portable navigation device (10) the navigation data from both the satellite positioning data and the vehicle movement data, and
presenting the navigation data to a user.

4. A method according to Claim 1, in which the communication link (L) is a link according to a Bluetooth protocol.

5. A method according to Claim 1, in which the communication link (L) is a link according to a Wi-Fi protocol.

6. A method according to any one of the preceding claims, in which the data regarding the movement of the vehicle comprises at least one of the following: vehicle speed data, distance data for a route completed by the vehicle, vehicle lateral acceleration data, and vehicle longitudinal acceleration data.

7. A method according to any one of the preceding claims, in which the on-board unit (20) includes a mass memory device comprising an extensive list of navigation instructions.

8. A method according to any one of the preceding claims, in which the portable navigation device (10) receives commands via on-board user interface devices at the on-board unit (20).

9. A method according to any one of the preceding claims, in which the portable navigation device (10) issues navigation instructions via on-board user interface devices at the on-board unit (20).

10. A method according to any one of the preceding claims, in which the portable navigation device (10) presents to the user vehicle movement data acquired at the on-board unit (20).

## Patentansprüche

1. Verfahren zum Betrieb eines Navigationssystems, wobei das Navigationssystem aufweist:
- eine autonome, bewegliche Navigationsvorrichtung (10) mit einer Einrichtung zur satellitengestützten Positionsbestimmung (SP), einer Speichereinrichtung (M), die mindestens eine geografische Referenz-(Straßen-)Karte beinhaltet, und einer Verarbeitungseinrichtung (P), die angepasst ist, Navigationsdaten von einem detektierten Standort der Vorrichtung (10) zu einem vorgegebenen Ziel auf der mindestens einen Referenzkarte zu berechnen; und
- eine Bordeinheit (20), die an Bord eines Fahrzeugs eingebaut und an ein Bordnetz (N) zum Erfassen von Bewegungsdaten aus einer Vielzahl von Bordsensoren angeschlossen ist;
wobei die bewegliche Navigationsvorrichtung (10) und die Bordeinheit (20) jeweilige Kommunikationseinrichtungen (C', C") zum Übertragen von Positionsdaten des Fahrzeugs von der beweglichen Navigationsvorrichtung (10) zur Bordeinheit (20) oder von Bewegungsdaten von der Bordeinheit (20) zu der beweglichen Navigationsvorrichtung (10) aufweisen,
wobei das Verfahren **dadurch gekennzeichnet ist, dass** es eine Initialisierungsprozedur (100-800) beinhaltet wie folgt:
wenn die bewegliche Navigationsvorrichtung eingeschaltet wird, sucht (200) die bewegliche Navigationsvorrichtung (10) nach einer sich innerhalb eines vorgegebenen Betriebskommunikationsbereichs befindenden Bordeinheit (20) in der Größenordnung der Größe des Fahrzeugs oder seines Insassenraums,
falls die Anwesenheit einer Bordeinheit (20) in der Nähe nicht detektiert wird (300), nimmt die bewegliche Navigationsvorrichtung (10) eine erste autonome Betriebskonfiguration an (400), in der die Navigationsdaten auf der Basis der aktuellen, von der Einrichtung zur satellitengestützten Positionsbestimmung (SP) bestimmten Position der Vorrichtung (10) berechnet werden, und
falls die Anwesenheit einer Bordeinheit (20) in der Nähe detektiert wird (300):
- sendet (500) die bewegliche Navigationsvorrichtung (10) eine Aktivierungs- und Verbindungsanforderung zur Bordeinheit, um eine drahtlose Übertragungsstrecke (L) zu der oben genannten Bordeinheit (20) aufzubauen;
- empfängt (700) die Bordeinheit (20) ein Signal zur Aktivierungsanforderung und richtet sich selbst ein (800), Fahrzeugbewegungsdaten aus dem Bordnetz (N) zu erfassen; und
- nimmt die bewegliche Navigationsvorrichtung (10) eine zweite, unterstützte Betriebskonfiguration ein (600), in der die Navigationsdaten auf der Basis von in der Bordeinheit (20) erfassten Fahrzeugbewegungsdaten berechnet werden.

2. Verfahren nach Anspruch 1, wobei ein Verarbeitungsmodul (DR) zum überschlägigen Bestimmen der Position des Fahrzeugs mit der Bordeinheit (20) verbunden wird, wobei das Verfahren beinhaltet:
Erfassen von Positionsdaten aus der Einrichtung zur satellitengestützten Positionsbestimmung (SP) der beweglichen Navigationsvorrichtung (10) über die aufgebaute Übertragungsstrecke und von Fahrzeugbewegungsdaten in der Bordeinheit (20), Berechnen der Navigationsdaten sowohl aus den satellitengestützt bestimmten Positionsdaten als auch aus den Fahrzeugbewegungsdaten in der Bordeinheit (20) und Übertragen der Navigationsdaten über die aufgebaute Strecke (L) zur beweglichen Navigationsvorrichtung (10), um die Daten einem Benutzer anzuzeigen.

3. Verfahren nach Anspruch 1, wobei ein Verarbeitungsmodul (DR) zum überschlägigen Bestimmen der Position des Fahrzeugs mit der beweglichen Navigationsvorrichtung (10) verbunden wird, wobei das Verfahren beinhaltet:
Erfassen von Positionsdaten aus der Einrichtung zur satellitengestützten Positionsbestimmung (SP) und von Fahrzeugbewegungsdaten in der Bordeinheit (20) über die aufgebaute Übertragungsstrecke (L),
Berechnen der Navigationsdaten sowohl aus den satellitengestützt bestimmten Positionsdaten als auch aus den Fahrzeugbewegungsdaten in der beweglichen Navigationsvorrichtung (10) und
Bereitstellen der Navigationsdaten, um sie einem Benutzer anzuzeigen.

4. Verfahren nach Anspruch 1, wobei die Übertragungsstrecke (L) eine Strecke nach einem Bluetooth-Protokoll ist.

5. Verfahren nach Anspruch 1, wobei die Übertragungsstrecke (L) eine Strecke nach einem Wi-Fi-Protokoll ist.

6. Verfahren nach einem der vorangegangenen Ansprüche, wobei die Daten hinsichtlich der Bewegung eines Fahrzeugs mindestens eines des Folgenden enthalten: Daten der Fahrzeuggeschwindigkeit, Entfernungsdaten für eine von dem Fahrzeug zurückgelegte Strecke, Querbeschleunigungsdaten des Fahrzeugs und Längsbeschleunigungsdaten des Fahrzeugs.

7. Verfahren nach einem der vorangegangenen Ansprüche, wobei die Bordeinheit (20) einen Massenspeicher mit einer umfassenden Liste von Navigationsanweisungen besitzt.

8. Verfahren nach einem der vorangegangenen Ansprüche, wobei die bewegliche Navigationsvorrichtung (10) Kommandos über Bordbenutzerschnittstellen in der Bordeinheit (20) empfängt.

9. Verfahren nach einem der vorangegangenen Ansprüche, wobei die bewegliche Navigationsvorrichtung (10) Navigationsanweisungen über Bordbenutzerschnittstellen in der Bordeinheit (20) ausgibt.

10. Verfahren nach einem der vorangegangenen Ansprüche, wobei die bewegliche Navigationsvorrichtung (10) dem Benutzer in der Bordeinheit (20) erfasste Fahrzeugbewegungsdaten anzeigt.

## Revendications

1. Procédé de mise en fonctionnement d'un système de navigation, dans lequel le système de navigation comprend :
- un dispositif de navigation portable autonome (10), comportant un moyen de positionnement par satellite (SP), un moyen à mémoire (M) contenant au moins une carte géographique (routière) de référence, et un moyen de traitement (P) apte à calculer des données de navigation d'une localisation de positionnement détectée du dispositif (10) vers une destination prédéterminée sur l'au moins une carte de référence ; et
- une unité embarquée (20) installée à bord d'un véhicule et connectée à un réseau embarqué (N) pour acquérir des données de déplacement en provenance d'une pluralité de capteurs embarqués ;
le dispositif de navigation portable (10) et l'unité embarquée (20) comprenant des moyens de communication respectifs (C', C") pour transmettre des données de position du véhicule du dispositif de navigation portable (10) vers l'unité embarquée (20) ou des données de déplacement de l'unité embarquée (20) vers le dispositif de navigation portable (10),
le procédé étant **caractérisé en ce qu'**il comprend une procédure d'initialisation (100-800), comprenant :
lorsque le dispositif de navigation portable est mis sous tension, la recherche (200) par le dispositif de navigation portable (10) de la présence d'une unité embarquée (20) à moins d'une distance de communication fonctionnelle prédéterminée de l'ordre de grandeur de la dimension du véhicule ou de son habitacle,
si la présence d'une unité embarquée voisine (20) n'est pas détectée (300), le dispositif de navigation portable (10) fait l'hypothèse d'une première configuration fonctionnelle autonome (400) dans laquelle les données de navigation sont calculées sur la base de la position courante du dispositif (10) déterminée par le moyen de positionnement par satellite (SP), et
si la présence d'une unité embarquée voisine (20) est détectée (300) :
- le dispositif de navigation portable (10) envoie (500) à l'unité embarquée une demande d'activation et de connexion de manière à établir une liaison de communication sans fil (L) avec l'unité embarquée précitée (20) ;
- l'unité embarquée (20) reçoit (700) un signal de demande d'activation et se configure de manière à acquérir (800) des données de déplacement de véhicule en provenance du réseau embarqué (N) ; et
- le dispositif de navigation portable (10) fait l'hypothèse d'une seconde configuration fonctionnelle assistée (600), dans laquelle les données de navigation sont calculées sur la base de données de déplacement du véhicule acquises sur l'unité embarquée (20).

2. Procédé selon la revendication 1, dans lequel un module de traitement (DR) destiné à déterminer la position estimée du véhicule est associé à l'unité embarquée (20), le procédé comprenant :
l'acquisition de données de positionnement en provenance du moyen de positionnement par satellite (SP) du dispositif de navigation portable (10) via la liaison de communication établie, et de données de déplacement du véhicule sur l'unité embarquée (20),
le calcul, sur l'unité embarquée (20), des données de navigation à la fois à partir des données de positionnement par satellite et des données de déplacement du véhicule, et
la transmission des données de navigation, par l'intermédiaire de la liaison établie (L), au dispositif de navigation portable (10) pour présenter les données à un utilisateur.

3. Procédé selon la revendication 1, dans lequel un module de traitement (DR) destiné à déterminer la position estimée du véhicule est associé au dispositif de navigation portable (10), le procédé comprenant :
l'acquisition de données de positionnement en provenance du moyen de positionnement par satellite (SP) et de données de déplacement du véhicule en provenance de l'unité embarquée (20) via la liaison de communication établie (L),
le calcul, sur le dispositif de navigation portable (10), des données de navigation à la fois à partir des données de positionnement par satellite et des données de déplacement du véhicule, et
la présentation des données de navigation à un utilisateur.

4. Procédé selon la revendication 1, dans lequel la liaison de communication (L) est une liaison conforme au protocole Bluetooth.

5. Procédé selon la revendication 1, dans lequel la liaison de communication (L) est une liaison conforme à un protocole WiFi.

6. Procédé selon l'une quelconque des revendications précédentes, dans lequel les données concernant le déplacement du véhicule comprennent au moins l'une des suivantes : des données de vitesse du véhicule, des données de distance pour un itinéraire suivi par le véhicule, des données d'accélération latérale du véhicule, et des données d'accélération longitudinale du véhicule.

7. Procédé selon l'une quelconque des revendications précédentes, dans lequel l'unité embarquée (20) comprend un dispositif de mémoire de masse comprenant une liste exhaustive d'instructions de navigation.

8. Procédé selon l'une quelconque des revendications précédentes, dans lequel le dispositif de navigation portable (10) reçoit des commandes via des dispositifs d'interface utilisateur embarqués sur l'unité embarquée (20).

9. Procédé selon l'une quelconque des revendications précédentes, dans lequel le dispositif de navigation portable (10) délivre des instructions de navigation via des dispositifs d'interface utilisateur embarqués sur l'unité embarquée (20).

10. Procédé selon l'une quelconque des revendications précédentes, dans lequel le dispositif de navigation portable (10) présente à l'utilisateur des données de déplacement du véhicule acquises sur l'unité embarquée (20).
